# EUROPÄISCHE PATENTSCHRIFT

(11) **EP 2 241 773 B1**
(45) Veröffentlichungstag und Bekanntmachung des Hinweises auf die Patenterteilung: **20.07.2016**
(21) Anmeldenummer: 10158124.7
(22) Anmeldetag: 29.03.2010
(51) Int. Cl.: F16C 33/20

(54) **Gleitlager**
Sliding bearing
Palier lisse

(30) Priorität: 17.04.2009 DE 102009018637
(43) Veröffentlichungstag der Anmeldung: 20.10.2010
(73) Patentinhaber: ElringKlinger AG, 72581 Dettingen (DE)
(72) Erfinder: Schlipf, Michael, 89520 Heidenheim (DE); Stern, Claudia, 73497 Tannhausen (DE); Wagner, Dennis, 25462 Rellingen (DE)
(74) Vertreter: Hoeger, Stellrecht & Partner Patentanwälte mbB

(56) Entgegenhaltungen:
- DE-A1- 4 142 287
- DE-A1- 10 126 462
- DE-A1-102007 040 095
- US-B1- 6 258 413
- US-B1- 6 726 994

## Beschreibung

Die Erfindung betrifft ein Gleitlager, insbesondere zur Verwendung als Trockenlaufgleitlager, mit einem Lagerkörper, in dem eine Lagerbuchse ausgebildet ist, deren Oberfläche mindestens bereichsweise aus einem Kunststoffmaterial hergestellt ist.

Bei der Auslegung der eingangs genannten Gleitlagern ist das Reibungs- und Verschleißverhalten von entscheidender Bedeutung. Der Gleitpartner des Gleitlagers, in der Regel eine Welle, ist häufig entweder aus Kunststoff oder aus Metall, oft gehärtetem Stahl, gefertigt.

Die eingangs genannten Gleitlager haben eine Reihe von Vorteilen:
- Trockenlauf (auch im Vakuum) ist über längere Betriebsdauern möglich;
- chemische Beständigkeit kann über die Auswahl bzw. eine Modifikation des Kunststoffmaterials der jeweiligen Applikation angepasst werden;
- hohe gestalterische Vielfalt und Integrationsfähigkeit der Gleitlager;
- thermische und elektrische Isolierung ist unproblematisch möglich;
- mechanische Dämpfung lässt sich den jeweiligen Anforderungen anpassen.

In der Praxis treten bei den eingangs genannten Gleitlagern vor allem die folgenden Probleme auf:
- Gleitverschleiß
- Laufflächenschmelzen
- Lagerdeformation bis zum partiellen Lagerschmelzen.

Kraftschlüssig relativ zueinander bewegte Werkstoffpaarungen, wie dies bei Gleitlagern ganz überwiegend der Fall ist, unterliegen generell Reibungs- und Verschleißerscheinungen. Die beiden Haupteinflussfaktoren bei der Festkörperreibung sind Adhäsion und Deformation in der Kontaktfläche. Die Reibungszahl setzt sich dementsprechend aus einem adhäsiven Anteil, der proportional zur realen Kontaktfläche und um so höher ist, je höher die Polarität und je glatter die Oberfläche ist, und einem deformativen Anteil, der um so höher ist, je größer die Rauheit und damit die Eindringtiefe ist, zusammen.

Da Kunststoffe in der Regel schlechte Wärmeleiter sind, hat die Gleitfläche häufig eine höhere Temperatur als das gesamte Lager. Während die Gleitfläche als Ort der Wärmeentstehung die Reibungszahl und den Verschleiß bestimmt, wird durch die Lagertemperatur in erster Linie die mechanische Belastbarkeit der Gleitpaarung festgelegt.

Bei Gleitreibung wird häufig ein Stick-Slip-Effekt beobachtet, der häufig dann auftritt, wenn die statische Reibungszahl (Ruhereibungszahl) größer ist als die dynamische (Gleitreibungszahl) bzw. wenn in einem schwingungsfähigen System die Reibungszahl mit zunehmender Gleitgeschwindigkeit abnimmt.

Herkömmliche Gleitlager, die für hohe Belastungen ausgelegt sind, werden häufig unter Einsatz von PTFE, gegebenenfalls mit Hochleistungsthermoplasten compoundiert hergestellt, wobei darüber hinaus noch weitere Gleitmittel, beispielsweise BN oder MoS₂, im Compound verarbeitet enthalten sein können. Als solche Hochleistungsthermoplaste kommen häufig PEEK, PPS oder PA in Verbindung mit PTFE zum Einsatz.

Hohe Anteile des PTFE im Compound ebenso wie natürlich die alleinige Verwendung von PTFE optimieren die Gleitreibung des Gleitlagers. Problematisch sind allerdings die Kaltflusseigenschaften des PTFE, die in vielen Fällen zu mangelhaften Standzeiten führen.

In zahlreichen Applikationen sind längere Standzeiten des Gleitlagers wünschenswert, insbesondere in Fällen, in denen der Austausch des Gleitlagers nur mit großem Aufwand und entsprechend langen Betriebsunterbrechungen zu bewerkstelligen ist oder Sicherheitsrisiken einen frühzeitigen Austausch erforderlich machen.

Aus dem US-Patent US 6,258,413 B1 sind Gleitlager bekannt, bei denen unter anderem Schichten aus PFA/PTFE oder auch anderen Fluorpolymeren in Abmischung mit weiteren Hochleistungsthermoplasten zum Einsatz kommen.

Die deutsche Offenlegungsschrift DE 10 2007 040 095 A1 beschreibt ein Verfahren zur Herstellung von TFE-Copolymerisaten sowie Polymer-Compounds dieser Copolymerisate, die organische Polymermaterialien als Füllstoff beinhalten, wobei diese aus Polyimid, Polyamidimid, PPS, PEEK, PPSO₂, aromatischen Estern und Aramid ausgewählt werden. Die TFE-Copolymerisate werden als Werkstoffe beschrieben, die als Alternative zu bekannten schmelzverarbeitbaren PTFE-Materialien Verwendung finden können.

Die Verwendung von Füllstoffen, beispielsweise Glas-, Bronze- und Kohlepartikeln, kann das Kaltflussverhalten von Standard-PTFE wie auch chemisch modifiziertem PTFE verbessern, jedoch sind dafür zum Teil erhebliche Gehalte notwendig, die wiederum andere Eigenschaften des PTFE, beispielsweise die mechanischen Eigenschaften, den Reibungskoeffizienten sowie die Chemikalienbeständigkeit, negativ beeinflussen können. Einige typische Materialien auf der Basis von Standard-PTFE und chemisch modifiziertem PTFE sind in der Tabelle 1 aufgelistet.

**Tabelle 1**

| Kunststoffmaterial | Füllstoff | Füllstoffgehalt [Gew.%] | Kaltfluss [%] (bleibend) |
|---|---|---|---|
| Standard-PTFE | - | - | 11 |
| | Glaspartikel | 15 | 9,5 |
| | | 25 | 8,5 |
| | Bronzepartikel (unregelm. Form) | 60 | 4,7 |
| | Kohlepartikel | 25 | 4,4 |
| chemisch modifiziertes PTFE | - | - | 4,2 |
| | Glaspartikel | 15 | 3,7 |
| | | 25 | 3,1 |
| | Bronzepartikel | 60 | 2,8 |
| | Kohlepartikel | 25 | 2,6 |

Die in der Tabelle 1 angegebenen Kaltflusswerte wurden bei 23 °C ermittelt, bei einer Druckbelastung von 15 N/mm², während 100 h und nach 24 h Druckentlastung.

Das vorstehend erwähnte und in seinen Kaltflusseigenschaften charakterisierte Standard-PTFE ist Teflon^{®} 701 von DuPont, das chemisch modifizierte PTFE ist ein PTFE-Copolymer mit einem PPVE-Comonomergehalt von 0,15 Gew.%. Auf diese Materialdefinitionen wird auch in den folgenden Teilen der Beschreibung zurückgegriffen.

Aufgabe der Erfindung ist es, ein Gleitlager zu schaffen, bei dem die Leistungsfähigkeit, insbesondere beim Trockenlauf, erhöht ist und das insbesondere bei diesen Bedingungen auch höhere als bisher übliche Gleitgeschwindigkeiten über lange Betriebsdauern toleriert.

Diese Aufgabe wird durch Gleitlager gemäß Anspruch 1 gelöst.

Überraschenderweise stellen sich bei voll fluorierten thermoplastischen Polymermaterialien, die sich von chemisch modifiziertem PTFE zunächst durch einen höheren und gegebenenfalls auch hiervon verschiedenen Comonomeranteil unterscheiden und nur geringfügig niedrigere Schmelzpunkte aufweisen, erheblich verbesserte Kaltflusseigenschaften ein, weiter überraschenderweise begleitet von drastisch verbesserten Verschleißeigenschaften.

So findet man z.B. für Moldflon^{®}-Materialien mit PPVE-Comonomergehalten von 0,2 bis 1 Mol-% einen Schmelzpunkt von 323 bis 315 °C gegenüber 327 °C für Standard- und chemisch modifiziertem PTFE. Damit kann auch bei den Moldflon^{®}-Materialien die Anwendungstemperatur immer noch bei 250 °C und darüber liegen.

Andererseits erhält man Kaltflusswerte für diese Moldflon^{®}-Materialien von ca. 2,4 %, ohne dass Füllstoffe verwendet werden müssten.

Bei den erfindungsgemäßen Gleitlagern lassen sich Umfangsgeschwindigkeiten von mehr als 5 m/s realisieren, die weit über den zulässigen maximalen Umgangsgeschwindigkeiten für Standard-PTFE und chemisch modifiziertes PTFE liegen (Standard-PTFE bestenfalls ca. 2,5 m/s; chemisch modifiziertes PTFE bestenfalls ca. 3,5 m/s).

Da die voll fluorierten thermoplastischen Polymermaterialien nach wie vor eine universelle Chemikalienbeständigkeit zeigen, können die erfindungsgemäßen Gleitlager Anwendungen besetzen, die den bisherigen Gleitlagern auf Basis von Standard-PTFE und chemisch modifiziertem PTFE verschlossen waren.
Auch die Unempfindlichkeit gegen Kantenpressung sowie die Korrosionsfreiheit und fehlende Feuchtigkeitsaufnahme und die Möglichkeit einer FDA-Zulassung erschließen den erfindungsgemäßen Gleitlagern vielfältige Anwendungsgebiete.

Als voll fluorierte thermoplastische Kunststoffmaterialien sind TFE-Copolymere vorgesehen, bei denen das Comonomere mit einem Mindestanteil von 0,2 Mol-% enthalten ist. Das Comonomere wird dabei ausgewählt aus Hexafluorpropylen, Perfluoralkylvinylether, Perfluor-(2,2-dimethyl-1,3-dioxol) und Chlortrifluorethylen.

Auch Copolymere von TFE mit Chlortrifluorethylen werden im Zusammenhang mit der vorliegenden Erfindung unter voll fluorierte Kunststoffmaterialien subsummiert, da der von Fluor verschiedene Halogenanteil vergleichsweise gering ist.

Ein häufig im Rahmen der Erfindung einzusetzendes Comonomer vom Polyalkylvinylether-Typ ist der Perfluorpropylvinylether (PPVE). Bei diesem Comonomeren empfehlen sich Anteile von weniger als 3,5 Mol-%, da hier die PTFE-Eigenschaften weitgehend erhalten bleiben und trotzdem eine thermoplastische Verarbeitung möglich ist. Weiter bevorzugt ist der Comonomeranteil beschränkt auf weniger als ca. 3 Mol-%, noch weiter bevorzugt sind Comonomeranteile von weniger als ca. 2,5 Mol-%, beispielsweise 1 Mol-% oder weniger bzw. 0,5 Mol-% oder weniger.

Besonders bevorzugt wird thermoplastisch verarbeitbares PTFE, auch schmelzverarbeitbares PTFE oder kurz m-PTFE genannt, verwendet. Eine Vielzahl solcher

Materialien ist beispielsweise in der WO 01/60911 und der WO 03/078481 beschreiben.

Auch PFA stellt ein geeignetes voll fluoriertes thermoplastisch verarbeitbares Kunststoffmaterial im Sinne der vorliegenden Erfindung dar.

Als erfindungsgemäß zu verwendendes voll halogeniertes, insbesondere voll fluoriertes Kunststoffmaterial kommen neben den oben beschriebenen TFE-Copolymeren auch Polymerblends von PTFE und einem oder mehreren weiteren thermoplastisch verarbeitbaren fluorierten Kunststoffen zum Einsatz.

Diese weiteren voll halogenierten Kunststoffmaterialien werden insbesondere ausgewählt aus der Gruppe der PTFE-Mikropulver. Hierbei handelt es sich um PTFE-Typen mit im Vergleich zu hochmolekularem (Standard-)PTFE niederem Molekulargewicht und niederer Schmelzviskosität. Sie werden typischerweise hergestellt entweder durch Emulsionspolymerisation, durch thermomechanischen Abbau von hochmolekularem PTFE im Extruder oder durch Strahlenabbau von hochmolekularem PTFE, gefolgt von einem Mahlprozess.

Die Eigenschaftsunterschiede von herkömmlichem oder hochmolekularem (Standard-)PTFE und niedermolekularen PTFE-Mikropulvern lassen sich beispielsweise wie folgt darstellen (vgl. S. Ebnesajjad, Fluoroplastics, Vol. 1, Non-Melt Processible Fluoro-plastics, Verlag William Andrew Publishing, 2000):

| Produkt | Molekulargewicht | Schmelzviskosität bei 380 °C in Pa·s |
|---|---|---|
| Standard PTFE | ca. 10⁶ - ca. 10⁸ | ca. 10¹⁰ - ca. 10¹³ |
| Mikropulver | ca. 10⁴ - ca. 10⁶ | ca. 10² - ca. 10⁵ |

Beispiele für solche Polymerblends finden sich ebenfalls in den Offenlegungsschriften WO 01/60911 und WO 03/078481.

Hervorzuheben ist die Eigenschaft der erfindungsgemäß verwendbaren Kunststoffmaterialien, sich gut auf zerspanenden CNC-Maschinen verarbeiten zu lassen. Dies eröffnet für die erfindungsgemäßen Gleitlager neue Herstellungsverfahren.

Bevorzugte erfindungsgemäß verwendbare Kunststoffmaterialien können Additive enthalten, insbesondere in Mengenanteilen von bis zu 60 Gew.-%, bezogen auf die Gesamtmasse des Kunststoffmaterials. Besonders bevorzugte erfindungsgemäß verwendbare Kunststoffmaterialien enthalten bis zu 40 Gew.-% an Additiven.

Typische Untergrenzen für Additive liegen bei ca. 0,5 Gew.-%.

Sind Farbstoffe als Additive in dem Kunststoffmaterial enthalten, liegt die Untergrenze für diesen Typ Additiv typisch bei ca. 0,01 Gew.-%. Die Obergrenze für Farbstoffanteile im Kunststoffmaterial liegt typischerweise bei ca. 3 Gew.-%.

Als Additive kommen des weiteren sowohl organische als auch anorganische Füllstoffe in Betracht.

Die Füllstoffe können insbesondere in Faserform, granular oder in Nadelform vorliegen.

Besonders bevorzugt sind funktionelle Füllstoffe, wie z.B. Festschmierstoffe wie z.B. BN, SiC, MoS₂, Graphit, Bronze, Ruß, Kohlefaser und dgl. Solche erfindungsgemäß verwendbaren Kunststoffmaterialien weisen verbesserte mechanische Eigenschaften aufgrund der Füllstoffanteile auf, während sich die vorteilhaften Eigenschaften des voll fluorierten Polymermaterials nicht in störendem Umfang verschlechtern , wenn die Anteile der Füllstoffe sich in den oben skizzierten Grenzen halten.

Kommen bei den erfindungsgemäßen Gleitlagern Compounds zum Einsatz, welche voll fluoriertes thermoplastisches Polymermaterial und einen oder mehrere weitere Hochleistungsthermoplaste umfassen, beträgt der Anteil der weiteren Hochleistungspolymere an der Gesamtmasse des erfindungsgemäß verwendbaren Compounds vorzugsweise 3 Gew.-% oder mehr. Unterhalb eines solchen Anteils ist die Eigenschaftsverbesserung teilweise nicht besonders ausgeprägt.

Andererseits sollte der Anteil an dem voll fluorierten thermoplastisch verarbeitbaren Polymer an der Gesamtmasse des Compounds vorzugsweise 3 Gew.-% oder mehr betragen. Dies stellt sicher, dass die Gleiteigenschaften des voll fluorierten Polymermaterials noch merklich sind.

Aufgrund der Auswahl der PTFE-Komponente als voll halogeniertes, insbesondere voll fluoriertes thermoplastisches Polymermaterial lässt sich das Compound mit großer Homogenität in der Gefügeausbildung erhalten.

Dies zeigt sich insbesondere daran, dass bei den erfindungsgemäß verwendbaren Compounds nach Verarbeitung durch für Thermoplaste übliche Methoden, also beispielsweise mittels Extrusion oder Spritzgussverfahren, im erstarrten Endprodukt die einzelnen Komponenten nicht mehr als ursprüngliches Gemisch zweier pulverförmiger Stoffe identifizierbar sind.

Im Gegensatz zu den erfindungsgemäß verwendbaren Compounds lassen sich durch spezielle Methoden, z.B. Anfärbetechniken in Verbindung mit Lichtmikroskop, oder unter Verwendung von polarisiertem Licht, in herkömmlichen Compounds Phasen der Einzelkomponenten erkennen. Je nach Typ des verwendeten PTFE verbleiben in dem Compound größere oder kleinere PTFE-Inselstrukturen erhalten, bei emulsionspolymerisiertem PTFE mit typischen Ausdehnungen von ca. 0,2 µm oder mehr, im Falle von suspensionspolymerisiertem PTFE mit typischen Ausdehnungen von ca. 15 µm oder mehr.

Das erfindungsgemäß verwendbare Compound ist demgegenüber im Wesentlichen frei von PTFE-Inselstrukturen.

Bei den erfindungsgemäß verwendbaren Compounds entfällt eine Beschränkung der Mischungsverhältnisse mit den weiteren Hochleistungspolymeren, die bei Standard-PTFE-Compounds erheblich ist.

Die Zusammensetzung der erfindungsgemäß verwendbaren Compounds kann bezüglich der Anteile an voll fluoriertem thermoplastischem Polymermaterial, insbesondere schmelzverarbeitbarem PTFE, sowie der oder den weiteren Hochleistungs-Polymer-Komponente(n) in weiten Bereichen variiert werden.

Überraschenderweise zeigen die erfindungsgemäß verwendbaren Compounds erheblich verbesserte mechanische Eigenschaften gegenüber den herkömmlichen PTFE-Compounds.

Insbesondere lassen sich erfindungsgemäß verwendbare Compounds, die einen hohen Anteil an weiterem Hochleistungspolymer und einen niederen Anteil an thermoplastisch verarbeitbarem PTFE enthalten, mit hoher Bruchdehnung, d.h. Bruchdehnungswerten von beispielsweise 20 % und mehr, weiter bevorzugt 30 % und mehr, herstellen. Die angegebenen Bruchdehnungswerte entsprechen Werten aus Tests gemäß DIN EN ISO 527-1 unter Verwendung von Prüfkörpern Typ V gemäß ASTM D-638.

Diese Eigenschaften sind insbesondere dann gefordert, wenn zum Einen das typische Eigenschaftsspektrum der Reinkomponente des Hochleistungspolymeren, also ein hoher E-Modul, ein hoher Deformationswiderstand und eine hohe Bruchfestigkeit, gefordert sind, zum Anderen aber die hohe Sprödigkeit des Hochleistungspolymeren einen erfolgreichen Einsatz verhindert.

PTFE-Materialien, insbesondere auch Standard-PTFE, haben von Haus aus weit höhere Bruchdehnungswerte als die weiteren Hochleistungspolymeren. Aber auch hier beobachtet man bei größer werdenden Anteilen hiervon im Compound einen drastischen Abfall der Bruchdehnungswerte.

Die erfindungsgemäß verwendbaren Compounds weisen demgegenüber bei gleichen Verhältnissen der Anteile an voll fluoriertem Polymermaterial zu weiterem Hochleistungspolymer, insbesondere auch PI oder PPS, deutlich günstigere Bruchdehnungswerte auf, die in einer Vielzahl an Gleitlager-Applikationen von großer Bedeutung sind.

Darüber hinaus eignen sich die erfindungsgemäß verwendbaren Compounds zur Herstellung hochtemperaturfester Bauteile, die ein günstiges Brandverhalten zeigen. Solche Bauteile sind im Flugzeugbau von großem Interesse.

Die erfindungsgemäß verwendbaren Compounds eignen sich außerdem hervorragend für die Spritzguss-Herstellung, wobei insbesondere die hohe mechanische Festigkeit der erhaltenen Bauteile gegenüber Druck- und Zugbelastungen von Vorteil sind. Die höhere Druckstandfestigkeit bei der Langzeit-Druckbelastung sowohl bei Raumtemperatur als auch bei Temperaturen bis zu 250 °C ist ein großer Vorteil.

Ferner lassen sich erfindungsgemäß verwendbare Compounds mit verbesserten Gleiteigenschaften herstellen, wobei einerseits ein Stick-Slip-Effekt vermieden werden kann und andererseits der Reibungskoeffizient sehr niedrig ist, insbesondere bei den erfindungsgemäßen Compounds mit hohem Anteil an schmelzverarbeitbarem PTFE. Hier sind bei einer Gleitgeschwindigkeit von V = 0,6 m/s und einer Belastung senkrecht zur Gleitrichtung von 0,5 bis 1,5 N/mm² Reibungskoeffizienten im Bereich von 0,1 bis 0,3 möglich.

Eine der Folgen des niederen Reibungskoeffizienten sind die geringen Verschleißwerte der erfindungsgemäß verwendbaren Compounds. Auch dies ist für die Gleitlageranwendung von Bedeutung.

Darüber hinaus sind Bauteile aus den erfindungsgemäß verwendbaren Compounds auch für höhere spezifische Flächenpressungen geeignet, zeigen einen geringeren Abrieb und damit eine längere Lebensdauer. Wiederum ist hier eine wichtige Eigenschaft für Gleitlageranwendungen vorhanden.

Die vorgenannten Vorteile der erfindungsgemäßen Compounds mit voll fluorierten thermoplastischen Polymermaterialien, insbesondere m-PTFE, gelten im Vergleich mit Compounds, die bei gleicher prozentualer Zusammensetzung als voll fluorierte Komponente Standard-PTFE oder chemisch modifiziertes, hochmolekulares PTFE beinhalten.

Bevorzugt werden die erfindungsgemäß verwendbaren Compounds auf dem Weg der Schmelze-Compoundierung hergestellt.

Diese und weitere Vorteile der Erfindung werden im Folgenden anhand der Zeichnungen und der Beispiele erläutert. Es zeigen im Einzelnen:
- Figur 1:: eine schematische Darstellung einer Testapparatur für erfindungsgemäße Gleitlager;
- Figur 2:: einen Folienausschnitt zur Bildung eines erfindungsgemäßen Gleitlagers;
- Figur 3:: graphische Darstellung der Ergebnisse von Abriebtests Stift auf Scheibe; und
- Figur 4:: graphische Darstellung der Ergebnisse von Abriebtests Stift auf Welle.

### Beispiele

### Beispiel 1

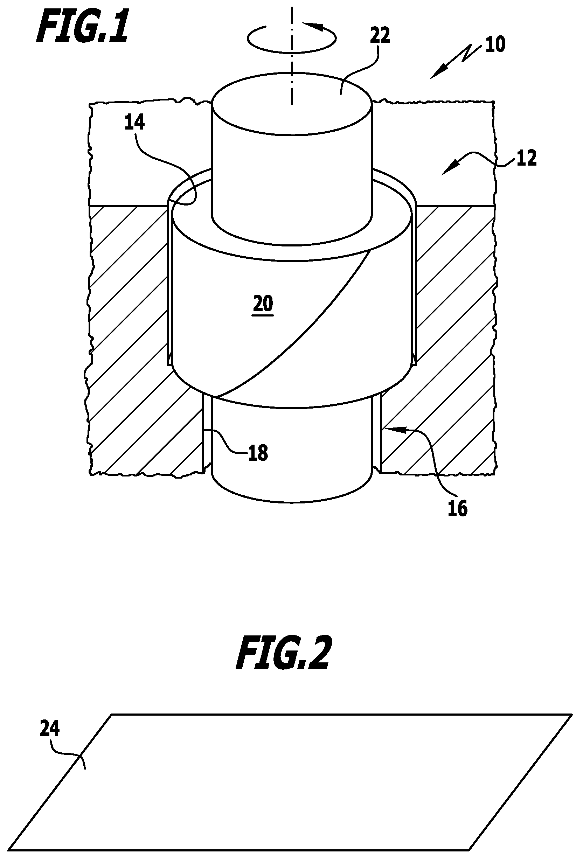

Ein Gleitlager in Form einer Gleitlagerhülse, hergestellt aus 100 Gew.% Moldflon^{®} MF10005, wie es z.B. in Rührwerken von Eismaschinen zum Einsatz kommen kann, wird in einer Testapparatur (Figur 1) im 2-Wochen-Dauerbetrieb bei 12.000 min⁻¹ auf Verschleiß bei Raumtemperatur getestet.

Das Kunststoffmaterial Moldflon^{®} MF10005 ist ein so genanntes m-PTFE mit einem Comonomer-Anteil von 1,7 Gew.% des Comonomeren PPVE. Die Schmelzflussrate MFR (372/5) beträgt 5 g/10 min.

Die Testapparatur 10 der Figur 1 umfasst einen Lagerblock 12 mit einer Lageraufnahme 14, die sich durch den gesamten Lagerblock 12 hindurch erstreckt. Die Lageraufnahme 14 weist an ihrem unteren Ende 16 einen Vorsprung 18 auf, der für eine in die Lageraufnahme 14 eingesetzte Gleitlagerhülse 20 ein Auflager bildet. Die Gleitlagerhülse weist eine Wandstärke von 1 mm auf. Die Höhe der Gleitlagerhülse beträgt 6 mm. Der freie Durchmesser der Gleitlagerhülse beträgt 10 mm.

Im Test nimmt die Gleitlagerhülse 20 eine Welle 22 auf, die einen Durchmesser von 10 mm aufweist und aus Edelstahl (Typ X210Cr12) hergestellt ist.

Die Gleitlagerhülse 20 wird aus einem Folienstück 24 (vgl. Figur 2), welches aus einer schmelzextrudierten, 1 mm dicken Folie aus Moldflon^{®} MF10005 in der in Figur 2 gezeigten Parallelogramm-Form ausgestanzt wird, durch Aufrollen gebildet und dann in die Lageraufnahme 14 eingesetzt.

Das so hergestellte Gleitlager weist auch nach 2 Wochen Dauerbetrieb keine Verschleißspuren auf.

### Vergleichsbeispiel 1

Zum Vergleich wurde aus einer von einem Zylinder aus gesintertem Standard-PTFE-Material (Teflon^{®} 701 von DuPont) geschälten Folie mit einer Dicke von 1 mm ein Folienstück mit denselben Abmessungen wie im vorstehenden Beispiel ausgestanzt, aufgerollt und ebenfalls als Gleitlagerhülse einem Test in der Testapparatur 10 unterworfen. Die Testbedingungen waren dieselben wie bei dem erfindungsgemäßen Gleitlager. Nach 2 Wochen Dauerbetrieb war das Gleitlager so weit verschlissen, dass es ausgetauscht werden musste.

### Beispiel 2

Für Gleitlager (Buchse oder Bundbuchse) nach ISO 3547-1 gemäß der vorliegenden Erfindung ergeben sich für die Kunststoffmaterialzusammensetzungen a, b und c die maximalen Betriebsdaten der Tabelle 2.

**Tabelle 2**

| Eigenschaften | a | b | c |
|---|---|---|---|
| max. Umfangsgeschwindigkeit im Trockenlauf [m/s] | > 5 | 1,5 | 1,5 |
| max. statische Flächenpressung [N/mm²] | 15 | 45 | 80 |
| Anwendungstemperaturbereich [°C] | - 250 bis + 250 | - 250 bis + 250 | 250 bis + 250 |

Die Kunststoffmaterialzusammensetzungen a, b und c waren wie folgt:
- a:: 100 Gew.% Moldflon^{®} MF10005
- b:: 60 Gew.% Moldflon^{®} MF10010, 30 Gew.% PEEK, 10 Gew.% Kohlefasern
- c:: 20 Gew.% Moldflon^{®} MF10005, 80 Gew.% PEEK

Moldflon^{®} MF10010 unterscheidet sich von Moldflon^{®} MF10005 durch einen höheren MFR-Wert von 10 g/min, der Comonomergehalt ist bei beiden Typen identisch.

### Beispiel 3

In Beispiel 3 werden die Ergebnisse von Verschleißtests von Kunststoffmaterialien auf der Basis von Standard-PTFE (Probe a) und m-PTFE (Probe b) mit unterschiedlichen Gehalten an Kohlefasern gegenübergestellt. Als m-PTFE wurde Moldflon® MF10005 eingesetzt.

Als Probekörper kommen Kunststoffmaterialstifte mit einem Durchmesser von 10 mm zum Einsatz. Diese werden mit einer Kraft von 0,42 N/mm² gegen eine Scheibe aus Edelstahl (X210Cr12) gepresst. Die Rautiefe Rz der Stahlscheibe betrug 2 µm. Die Temperatur der Stahlscheibe war 100 °C, die Relativgeschwindigkeit betrug 4 m/s. Die Testdauer betrug jeweils 100 h. Prüfatmosphäre: Luft. Die Prüfung erfolgte in Anlehnung an DIN ISO 7148-2.

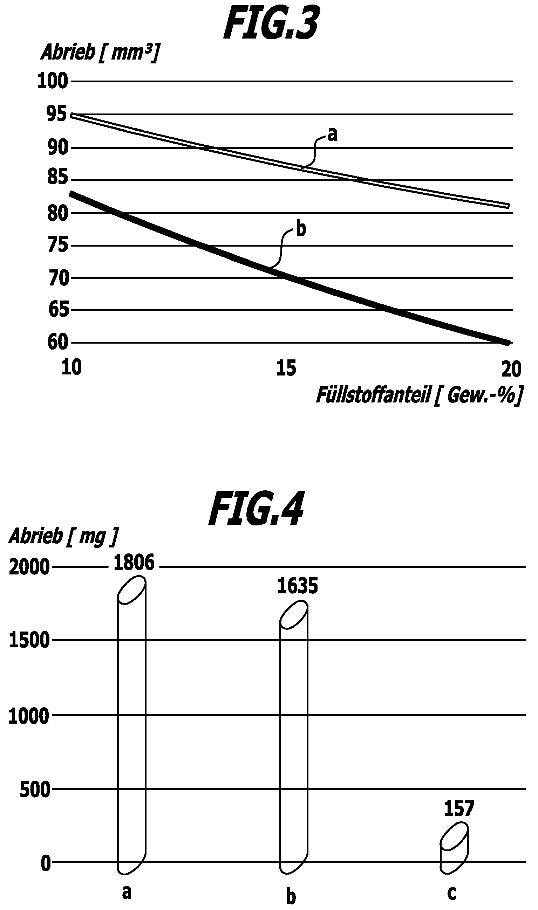

Die Testergebnisse für Kohlefasergehalte von 10 bis 20 Gew.% sind aus dem Graphen der Figur 3 ersichtlich.

### Beispiel 4

In Beispiel 4 werden die Ergebnisse von Verschleißtests von Kunststoffmaterialien in Form von Standard-PTFE (Probe a), modifiziertem PTFE (Probe b) und m-PTFE (Moldflon^{®} MF10005) (Probe c) gegenübergestellt.

Als Probekörper kommt ein Stift mit einem Durchmesser von 10 mm zum Einsatz. Er wird mit einer Kraft von 0,21 N/mm² auf eine Welle aus Edelstahl (X210Cr12) mit einer Rautiefe Rz von 1,91 µm gepresst. Die Gleitgeschwindigkeit beim Test zwischen Welle und Stift betrug 4 m/s, die Prüfatmosphäre ist Luft, die Testtemperatur 100 °C. Die Prüfung erfolgte in Anlehnung an DIN ISO 7148-2.

Die Testergebnisse für eine Testdauer von 1 h sind dem Graphen der Figur 4 zu entnehmen.

## Patentansprüche

1. Gleitlager, insbesondere Trockenlaufgleitlager, mit einem Lagerkörper, in dem eine Lagerbuchse ausgebildet ist, deren Oberfläche mindestens bereichsweise aus einem Kunststoffmaterial hergestellt ist, wobei das Kunststoffmaterial ein voll fluoriertes thermoplastisches Polymermaterial umfasst, compoundiert mit einem Anteil von einem oder mehreren weiteren Hochleistungsthermoplasten, wobei der Hochleistungsthermoplast ausgewählt ist aus Polyetherketonen, Polyphenylensulfid (PPS), Polyphenylensulfon (PPSO₂), Polyamid (PA), Polyimid (PI), Polyamidimid (PAI) und/oder Polyetherimid (PEI), sowie Copolymeren und Derivaten dieser Polymeren und Copolymeren, **dadurch gekennzeichnet, dass** das vollfluorierte Polymermaterial schmelzverarbeitbares PTFE umfasst, dass das schmelzverarbeitbare PTFE ein TFE-Copolymer umfasst, wobei das Comonomer mit einem Anteil von ca. 0,2 Mol-% oder mehr enthalten ist, wobei das Comonomer ausgewählt ist aus Hexafluoropropylen, Perfluoroalkylvinylether, Perfluor-(2,2-dimethyl-1,3-dioxol) und Chlortrifluoroethylen, und wobei im Falle des Comonomers PPVE dieses mit einem Gehalt von ca. 0,2 bis weniger als 3,5 Mol-% in dem TFE-Copolymer enthalten ist, und dass das Kunststoffmaterial ein Compound mit einer homogenen Verteilung der Anteile des voll fluorierten thermoplastischen Polymermaterials und dem oder den weiteren Hochleistungsthermoplasten ist und im Wesentlichen frei von PTFE-Inselstrukturen ist.

2. Gleitlager nach Anspruch 1, **dadurch gekennzeichnet, dass** der Anteil des voll fluorierten thermoplastischen Polymermaterials an dem Kunststoffmaterial ca. 3 Gew.% oder mehr beträgt, wobei weiter bevorzugt der Anteil des voll fluorierten thermoplastischen Polymermaterials an dem Kunststoffmaterial ca. 97 Gew.% oder weniger beträgt.

3. Gleitlager nach Anspruch 2, **dadurch gekennzeichnet, dass** das Polyetherketon ausgewählt ist aus der Gruppe von Polyetherketon (PEK), Polyetheretherketon (PEEK) und Polyetherarylketon (PEAK) sowie Copolymeren und Derivaten dieser Polymere.

4. Gleitlager nach Anspruch 2 oder 3, **dadurch gekennzeichnet, dass** das PPS und/oder das PPSO₂ ein chemisch modifiziertes PPS bzw. PPSO₂ ist.

5. Gleitlager nach einem der Ansprüche 2 bis 4, **dadurch gekennzeichnet, dass** das Polyamid (PA) ein Hochtemperaturpolyamid (HTPA), insbesondere ein Polyarylamid und/oder ein Polyphthalamid und/oder Polyisophthalamid ist.

6. Gleitlager nach einem der Ansprüche 2 bis 5, **dadurch gekennzeichnet, dass** das Kunststoffmaterial als Compound im Wege der Schmelzecompoundierung hergestellt ist.

7. Gleitlager nach Anspruch 6, **dadurch gekennzeichnet, dass** das Compound im Wesentlichen porenfrei ist.

8. Gleitlager nach einem der Ansprüche 1 bis 7, **dadurch gekennzeichnet, dass** das Kunststoffmaterial Additive umfasst, wobei vorzugsweise als Additive ein oder mehrere Füllstoffe enthalten sind, welche bevorzugt ausgewählt sind aus BN, SiC, MoS₂, Kohlefasern, Bronze, Ruß und Graphit.

9. Gleitlager nach einem der Ansprüche 1 bis 8, **dadurch gekennzeichnet, dass** der Lagerkörper im Wesentlichen vollständig aus dem Kunststoffmaterial besteht.

10. Gleitlager nach einem der Ansprüche 1 bis 8, **dadurch gekennzeichnet, dass** der Lagerkörper ein metallisches Bauteil umfasst, welches die Lagerbuchse beinhaltet, welche mindestens bereichsweise mit dem Kunststoffmaterial beschichtet ist,
wobei vorzugsweise das Kunststoffmaterial auf das metallische Bauteil durch Laminieren oder direktes Aufextrudieren aufgebracht ist,
wobei weiter bevorzugt das metallische Bauteil ein Element aus einem metallischen Gewebe oder einem metallischen Geflecht umfasst,
wobei das metallische Bauteil insbesondere ein Stahlteil oder ein Bronzeteil ist.

11. Gleitlager nach einem der Ansprüche 1 bis 10, **dadurch gekennzeichnet, dass** das Gleitlager in einem Spritzgussverfahren oder mittels eines Zerspanungsschritts hergestellt ist.

12. Verwendung eines Gleitlagers nach einem der Ansprüche 1 bis 11 als Trockengleitlager.

13. Verwendung eines Gleitlagers nach einem der Ansprüche 1 bis 11 als Gleitlager unter Vakuumbedingungen.

## Claims

1. Plain bearing, in particular dry-running plain bearing, with a bearing body, in which a bearing bush is configured, the surface of which is produced at least in some areas from a plastic material, the plastic material comprising a fully fluorinated thermoplastic polymer material, compounded with a proportion of one or more further high-performance thermoplastics, the high-performance thermoplastic being selected from polyether ketones, polyphenylene sulphide (PPS), polyphenylene sulphone (PPSO₂), polyamide (PA), polyimide (PI), polyamide-imide (PAI) and/or polyether imide (PEI), as well as copolymers and derivatives of these polymers and copolymers, **characterized in that** the fully fluorinated polymer material comprises melt-processable PTFE, **in that** the melt-processable PTFE comprises a TFE copolymer, the comonomer being contained in a proportion of approximately 0.2 mole % or more, the comonomer being selected from hexafluoropropylene, perfluoroalkyl vinyl ether, perfluoro-(2,2-dimethyl-1,3-dioxol) and chlorotrifluoroethylene, and in the case of the comonomer PPVE, this being contained in the TFE copolymer with a content of approximately 0.2 to less than 3.5 mole %, and **in that** the plastic material is a compound with a homogeneous distribution of the proportions of the fully fluorinated thermoplastic polymer material and the further high-performance thermoplastic or thermoplastics and is substantially free from PTFE island structures.

2. Plain bearing according to claim 1, **characterized in that** the proportion of the fully fluorinated thermoplastic polymer material in the plastic material amounts to approximately 3% by weight or more, further preferred, the proportion of the fully fluorinated thermoplastic polymer material in the plastic material amounting to approximately 97% by weight or less.

3. Plain bearing according to claim 2, **characterized in that** the polyether ketone is selected from the group of polyether ketone (PEK), polyether ether ketone (PEEK) and polyether aryl ketone (PEAK) as well as copolymers and derivatives of these polymers.

4. Plain bearing according to claim 2 or 3, **characterized in that** the PPS and/or the PPSO₂ is a chemically modified PPS or PPSO₂.

5. Plain bearing according to one of claims 2 to 4, **characterized in that** the polyamide (PA) is a high-temperature polyamide (HTPA), in particular a polyarylamide and/or a polyphthalamide and/or polyisophthalamide.

6. Plain bearing according to one of claims 2 to 5, **characterized in that** the plastic material is produced as a compound by way of melt-compounding.

7. Plain bearing according to claim 6, **characterized in that** the compound is substantially pore-free.

8. Plain bearing according to one of claims 1 to 7, **characterized in that** the plastic material comprises additives, one or more fillers preferably being contained as additives, the fillers preferably being selected from BN, SiC, MoS₂, carbon fibres, bronze, carbon black and graphite.

9. Plain bearing according to one of claims 1 to 8, **characterized in that** the bearing body is substantially composed completely of the plastic material.

10. Plain bearing according to one of claims 1 to 8, **characterized in that** the bearing body comprises a metal structural part, which contains the bearing bush, which is coated at least in some areas with the plastic material, the plastic material preferably being applied to the metal structural part by lamination or direct extrusion thereon, further preferred, the metal structural part comprising an element composed of a metal fabric or a metal braid, the metal structural part being, in particular, a steel part or a bronze part.

11. Plain bearing according to one of claims 1 to 10, **characterized in that** the plain bearing is produced in an injection moulding process or by means of a machining step.

12. Use of a plain bearing according to one of claims 1 to 11 as a dry-running plain bearing.

13. Use of a plain bearing according to one of claims 1 to 11 as a plain bearing under vacuum conditions.

## Revendications

1. Palier lisse, notamment palier lisse à fonctionnement à sec, comprenant un corps de palier dans lequel est réalisé ou formé un coussinet de palier dont la surface est fabriquée, au moins par secteurs, en un matériau de matière plastique, le matériau de matière plastique comportant un matériau polymère thermoplastique totalement fluoré, combiné à une fraction d'un ou plusieurs thermoplastiques haute-performance supplémentaires, le thermoplastique haute-performance étant choisi parmi polyéther-cétone, polysulfure de phénylène (PPS), polysulfone de phénylène (PPSO₂), polyamide (PA), polyimide (PI), polyamide-imide (PAI) et/ou polyéther-imide (PEI), ainsi que des copolymères et dérivés de ces polymères et copolymères, **caractérisé en ce que** le matériau polymère totalement fluoré comprend du PTFE pouvant être traité par fusion, **en ce que** le PTFE pouvant être traité par fusion comprend un copolymère de TFE, le comonomère étant contenu selon une fraction d'environ 0,2 % mol. ou davantage, le comonomère étant choisi parmi hexafluoropropylène, perfluoro(alkyle-vinyle-éther), perfluor-(2,2-diméthyle-1,3-dioxol) et chlorotrifluoroéthylène, et dans le cas d'un comonomère PPVE, celui-ci est contenu selon une teneur d'environ 0,2 à moins de 3,5 % mol. dans le copolymère TFE, et **en ce que** le matériau de matière plastique est un matériau composé présentant une répartition homogène des teneurs du matériau polymère thermoplastique totalement fluoré et du ou des thermoplastiques haute-performance supplémentaires, et est sensiblement exempt de structures en ilots de PTFE.

2. Palier lisse selon la revendication 1, **caractérisé en ce que** la fraction du matériau polymère thermoplastique totalement fluoré dans le matériau de matière plastique vaut environ 3% en poids ou davantage, et la fraction du matériau polymère thermoplastique totalement fluoré dans le matériau de matière plastique valant, par ailleurs, de préférence environ 97% en poids ou moins.

3. Palier lisse selon la revendication 2, **caractérisé en ce que** le polyéthercétone est choisi parmi le groupe formé par polyéthercétone (PEK), polyétheréthercétone (PEEK) et polyaryléthercétone (PAEK), ainsi que de copolymères et dérivés de ces polymères.

4. Palier lisse selon la revendication 2 ou la revendication 3, **caractérisé en ce que** le PPS et/ou le PPSO₂ est un PPS ou respectivement un PPSO₂ chimiquement modifié.

5. Palier lisse selon l'une des revendications 2 à 4, **caractérisé en ce que** le polyamide (PA) est un polyamide haute température (HTPA), notamment un polyarylamide et/ou un polyphtalamide et/ou polyisophtalamide.

6. Palier lisse selon l'une des revendications 2 à 5, **caractérisé en ce que** le matériau de matière plastique est fabriqué en tant que matériau composé, par le biais d'une combinaison par fusion.

7. Palier lisse selon la revendication 6, **caractérisé en ce que** le matériau composé est sensiblement exempt de pores.

8. Palier lisse selon l'une des revendications 1 à 7, **caractérisé en ce que** le matériau de matière plastique comprend des additifs, les additifs contenus étant de préférence des substances de charge, qui sont choisies de préférence parmi les composés suivants BN, SiC, MoS₂, fibres de carbone, bronze, suies et graphite.

9. Palier lisse selon l'une des revendications 1 à 8, **caractérisé en ce que** le corps de palier est pour l'essentiel totalement réalisé en ledit matériau de matière plastique.

10. Palier lisse selon l'une des revendications 1 à 8, **caractérisé en ce que** le corps de palier comprend une pièce métallique, qui renferme le coussinet de palier, qui est revêtu, au moins par secteurs, par ledit matériau de matière plastique,
le matériau de matière plastique étant de préférence appliqué sur la pièce métallique par placage-stratification ou extrusion directe,
la pièce métallique comprenant par ailleurs, de manière particulièrement préférée, un élément en un tissu métallique ou en une tresse métallique,
la pièce métallique étant notamment une pièce en acier ou une pièce en bronze.

11. Palier lisse selon l'une des revendications 1 à 10, **caractérisé en ce que** le palier lisse est fabriqué selon un procédé de moulage par injection ou moyennant une étape d'usinage par enlèvement de copeaux.

12. Utilisation d'un palier lisse selon l'une des revendications 1 à 11, en tant que palier lisse à fonctionnement à sec.

13. Utilisation d'un palier lisse selon l'une des revendications 1 à 11, en tant que palier lisse sous des conditions de vide.
